# EUROPEAN PATENT APPLICATION

(11) **EP 3 041 176 A1**
(43) Date of publication of application: **06.07.2016**
(21) Application number: 13882333.1
(22) Date of filing: 22.11.2013
(51) Int. Cl.: H04L 12/58

(54) **METHOD FOR SYNCHRONOUSLY PLAYING MULTIMEDIA CONTENT, SERVER, CLIENT AND SYSTEM**

(30) Priority: 30.08.2013 CN 201310388949
(71) Applicant: ZTE Corporation, Shenzhen, Guangdong 518057 (CN)
(72) Inventor: YAO, Lizhe, Shenzhen Guangdong 518057 (CN); CHEN, Jun, Shenzhen Guangdong 518057 (CN); SHANG, Guoqiang, Shenzhen Guangdong 518057 (CN)
(74) Representative: Deambrogi, Edgardo
(86) International application number: PCT/CN2013/087718
(87) International publication number: WO 2014/169657

(57) **Abstract**

Provided are a method for synchronously playing a multimedia content, an address book server, an address book client, a terminal and an address book system. The method comprises: an address book server interacts with a first address book client in a first terminal to acquire information about a multimedia application that currently is in an active state in the first terminal; and the address book server sends the information about the multimedia application to a second address book client in a second terminal, so as to enable the second address book client to synchronously play the content of the multimedia application in the second terminal according to the information about the multimedia application. The disclosure solves the problem of how to dynamically present, through an address book, multimedia content being watched by other users, and achieves an affect of improving the user experience.

## Description

### Technical Field

The disclosure relates to the field of communications, and in particular to a method for synchronously playing multimedia content, an address book server, an address book client, a terminal including an address book client, and an address book system.

### Background

At present, many mobile electronic devices (such as, smart phones, notebooks, tablet computers, Personal Digital Assistants (PDAs) and the like) used by people are capable of interacting with other people. Address book, which is used to store and manage the detail and contact information of other people, is a common feature for these devices. With the development of mobile Internet, fusion address book appears accordingly, which, different from a traditional address book, may be stored at a network side, may be synchronized among different terminals of users and enriches user information therein, specifically, the information includes various dynamic information (for example, information about current states of users, information about applications currently used by users and so on) except traditional static information (for example, phone number, home address and so on). However, the so called dynamic information referred above also is presented by static information such as descriptive information, label, key boards and the like, which is not dynamic information in true sense, especially in a simulated social network environment. In a simulated social network environment, users expect to see what other users are watching, but the content described by static information such as label, key words and the like.

In view of the problem of how to dynamically present, through an address book, multimedia content being watched by other users in a simulated social network environment, no solution has been put forward.

### Summary

The embodiment of the disclosure provides a method for synchronously playing a multimedia content, an address book server, an address book client, a terminal including the address book client and an address book system, to solve the problem of how to dynamically present, through an address book, multimedia content being watched by other users in a simulated social network environment.

According to one aspect of the disclosure, a method for synchronously playing multimedia content is provided, wherein the method includes: an address book server interacts with a first address book client in a first terminal to acquire information about a multimedia application that currently is in an active state in the first terminal; and the address book server sends the information about the multimedia application to a second address book client in a second terminal, so as to enable the second address book client to synchronously play the content of the multimedia application in the second terminal according to the information about the multimedia application.

Preferably, the address book server interacting with the first address book client in the first terminal to acquire information about the multimedia application that currently is in the active state in the first terminal includes: the address book server periodically interacts with the first address book client to acquire the descriptive information of the multimedia application that currently is in the active state in the first terminal, wherein the descriptive information comprises a Uniform Resource Locator (URL) address of the multimedia application; the address book server updates the descriptive information to the shared information of the first terminal saved in the address book server; the address book server responds to a request for acquiring the shared information of the first terminal from the second address book client and acquires the current play progress of the multimedia application by interacting with the first address book client.

Preferably, the address book server sending the information about the multimedia application to the second address book client in the second terminal includes: the address book server acquires the content of the multimedia application from a multimedia server according to the URL address of the multimedia application; the address book server sends the content of the multimedia application and the current play progress of the multimedia application to the second address book client.

Preferably, after the address book server sends the content of the multimedia application and the current play progress of the multimedia application to the second address book client, the method might further include: the second address book client synchronously plays the content of the multimedia application in the second terminal according to the content of the multimedia application and the current play progress of the multimedia application.

Preferably, the address book server sending the information about the multimedia application to the second address book client in the second terminal includes: the address book server sends the descriptive information of the multimedia application and the current play progress of the multimedia application to the second address book client.

Preferably, after the address book server sends the descriptive information of the multimedia application and the current play progress of the multimedia application to the second address book client, the method might further include: the second terminal acquires the content of the multimedia application from a multimedia server according to the URL address of the multimedia application included in the descriptive information; the second address book client synchronously plays the content of the multimedia application in the second terminal according to the content of the multimedia application and the current play progress of the multimedia application.

Preferably, the descriptive information of the multimedia application further includes at least one of the following: play format of the multimedia application, play resolution of the multimedia application and introduction of the multimedia application.

Preferably, before the second address book client synchronously plays the content of the multimedia application in the second terminal according to the information about the multimedia application, the method might further include: the second address book client updates the shared information of the first terminal saved in the second terminal according to the information about the multimedia application.

Preferably, before the address book server acquires information about the multimedia application that currently is in the active state in the first terminal, the method might further include: the first terminal validates the legality of a request for acquiring the information about the multimedia application.

Preferably, the second address book client synchronously plays the content of the multimedia application by a manner of embedding a video play window into the items, which are saved in the second address book client, of the first terminal shared information.

Preferably, the address book server is a fusion address book server and the address book client is a fusion address book client.

According to another aspect of the disclosure, an address book server is provided, including: an acquisition component configured to interact with a first address book client in a first terminal to acquire information about a multimedia application that currently is in an active state in the first terminal; a sending component configured to send the information about the multimedia application to a second address book client in a second terminal, so as to enable the second address book client to synchronously play the content of the multimedia application in the second terminal according to the information about the multimedia application.

Preferably, the acquisition component includes: a first acquisition sub-component configured to periodically interact with the first address book client to acquire the descriptive information of the multimedia application that currently is in the active state in the first terminal, wherein the descriptive information comprises a URL address of the multimedia application; an update sub-component configured to update the descriptive information to the shared information of the first terminal saved in the address book server; a second acquisition sub-component configured to respond to a request for acquiring the shared information of the first terminal from the second address book client, and to acquire the current play progress of the multimedia application by interacting with the first address book client.

Preferably, the sending component includes: a content sub-component configured to acquire the content of the multimedia application from a multimedia server according to the URL address of the multimedia application; a sending sub-component configured to send the content of the multimedia application and the current play progress of the multimedia application to the second address book client.

According to a third aspect of the disclosure, an address book client is provided, wherein the address book client includes: a first transceiving component configured to interact with an address book server so as to provide to the address book server information about a multimedia application that currently is in an active state in a first terminal in which the address book client is located; a second transceiving component configured to receive from the address book server information about the multimedia application that currently is in the active state in a second terminal, wherein the information about the multimedia application that currently is in the active state in the second terminal is provided to the address book server by the second address book client in the second terminal; an execution component configured to synchronously play the content of the multimedia application in the first terminal according to the received information about the multimedia application that currently is in the active state in the second terminal.

Preferably, the address book client might further include: an updating component configured to update the shared information of the second terminal saved therein according to the received information about the multimedia application that currently is in the active state in the second terminal.

Preferably, the address book client might further include: a download component configured to acquire, from the multimedia server, the content of the multimedia application that currently is in the active state in the second terminal according to the URL address of the multimedia application carried in the received information about this multimedia application.

Preferably, the address book client might further include: a validation component configured to validate, before providing to the address book server the information about the multimedia application that currently is in the active state in the first terminal, the legality of providing the information about the multimedia application.

According to a fourth aspect of the disclosure, a terminal is provided, including: an address book client described above.

According to a fifth aspect of the disclosure, an address book system is provided, including: an address book server described above and at least one terminal described above.

In the embodiment of the disclosure, an address book client is employed to provide, to an address book server, information about a multimedia application that currently is in an active state in a terminal in which the address book client is located, so that other terminals installed with the address book client may acquire the information about the multimedia application from the address book server and dynamically present the multimedia application, thus, the problem of how to dynamically present through an address book multimedia content being watched by other users is solved, and user experience is improved.

### Brief Description of the Drawings

For a better understanding of the disclosure, accompanying drawings described hereinafter are provided to constitute one part of the application; the schematic embodiments of the disclosure and the description thereof are used to illustrate the disclosure but to limit the disclosure improperly. In the accompanying drawings:
Fig. 1 is a flowchart of a method for synchronously playing multimedia content according to the embodiment of the disclosure;
Fig. 2 is a structure diagram showing components of an address book server according to the embodiment of the disclosure;
Fig. 3 is a structure diagram showing components of an address book client according to the embodiment of the disclosure;
Fig. 4 is a structure diagram of a terminal according to the embodiment of the disclosure;
Fig. 5 is a structure diagram of an address book system according to the embodiment of the disclosure;
Fig. 6 is a diagram of an address book system according to Embodiment 1 of the disclosure;
Fig. 7 is a diagram of an address book system according to Embodiment 4 of the disclosure;
Fig. 8 is a diagram showing the presentation manner of a multimedia according to one embodiment of the disclosure;
Fig. 9 is a diagram showing the presentation manner of a multimedia according to another embodiment of the disclosure; and
Fig. 10 is a diagram showing the presentation manner of a multimedia according to a third embodiment of the disclosure.

### Detailed Description of the Embodiments

The disclosure is described below in detail by reference to the accompanying drawings in conjunction with embodiments. It should be noted that the embodiments in the application and the characteristics of the embodiments may be combined if no conflict is caused.

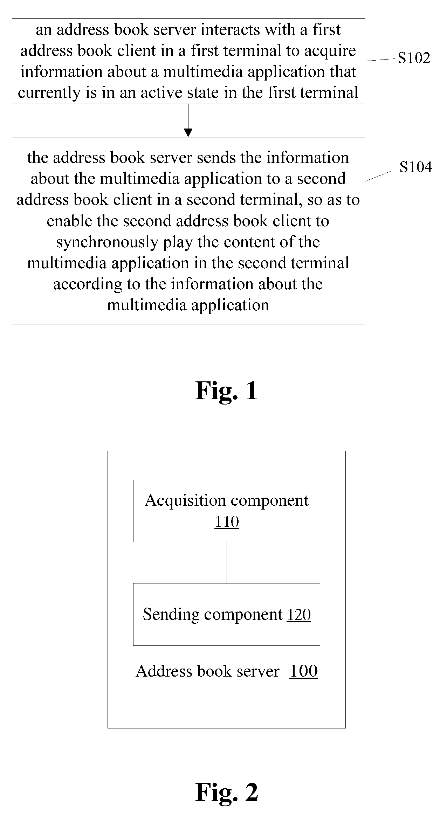

Fig. 1 is a flowchart of a method for synchronously playing multimedia content according to the embodiment of the disclosure. As shown in Fig. 1, the method includes the following steps:
S102: an address book server interacts with a first address book client in a first terminal to acquire information about a multimedia application that currently is in an active state in the first terminal.

S104: the address book server sends the information about the multimedia application to a second address book client in a second terminal, so as to enable the second address book client to synchronously play the content of the multimedia application in the second terminal according to the information about the multimedia application.

In the embodiment, an address book client is employed to provide, to an address book server, information about the multimedia application that currently is in the active state in a terminal in which the address book client is located, so that other terminals installed with the address book client may acquire the information about the multimedia application from the address book server and dynamically present the multimedia application, thus, the problem of how to dynamically present through an address book multimedia content being watched by other users is solved, and user experience is improved.

S102 includes: the address book server periodically interacts with the first address book client to acquire the descriptive information of a multimedia application that currently is in the active state in the first terminal, wherein the descriptive information comprises an URL address of the multimedia application; the address book server updates the descriptive information to the shared information of the first terminal saved in the address book server; the address book server responds to a request for acquiring the shared information of the first terminal from the second address book client and acquires the current play progress of the multimedia application by interacting with the first address book client.

S104 includes: the address book server acquires the content of the multimedia application from a multimedia server according to the URL address of the multimedia application; the address book server sends the content of the multimedia application and the current play progress of the multimedia application to the second address book client.

Of course, the second address book client also may acquire, in the following steps, the content of the multimedia application from the media server according to the URL address of the multimedia application.

After S104, the method further includes: the second address book client synchronously plays the content of the multimedia application in the second terminal according to the content of the multimedia application and the current play progress of the multimedia application.

The descriptive information of the multimedia application further includes at least one of the following: play format of the multimedia application, play resolution of the multimedia application and introduction of the multimedia application. Both the address book server and the second address book client may separately update respective saved shared information of the first terminal according to the above information.

In S102, the first terminal also may validate the legality of request for acquiring the information about the multimedia application in the first terminal from another terminal.

The second address book client synchronously plays the content of the multimedia application by a manner of embedding a video play window into the items of the first terminal shared information saved in the second address book client. There are multiple ways to embed a video play window, and one may be selected as actually needed.

It should be noted that the address book server and the address book client mentioned in this embodiment may be realized by enhancing the functions of the existing standard fusion address book server and fusion address book client, and, of course, may be realized by adding a function of dynamic presentation to a common address book system capable of sharing contact information.

Fig. 2 is a structure diagram showing components of an address book server according to the embodiment of the disclosure. As shown in Fig. 2, the address book server 100 includes: an acquisition component 110 configured to interact with a first address book client in a first terminal to acquire information about a multimedia application that currently is in an active state in the first terminal; a sending component 120 configured to send the information about the multimedia application to a second address book client in a second terminal, so as to enable the second address book client to synchronously play the content of the multimedia application in the second terminal according to the information about the multimedia application.

In this embodiment, the acquisition component 110 is employed to interact with the first address book client in the first terminal to acquire the information about a multimedia application that currently is in the active state in the first terminal, so that other terminals installed with the address book client may acquire the information about the multimedia application from the address book server and dynamically present the multimedia application, thus, the problem of how to dynamically present through an address book multimedia content being watched by other users is solved, and user experience is improved.

The acquisition component 110 includes: a first acquisition sub-component 112 configured to periodically interact with the first address book client to acquire the descriptive information of a multimedia application that currently is in an active state in the first terminal, wherein the descriptive information includes a URL address of the multimedia application; an update sub-component 114 configured to update the descriptive information to the shared information of the first terminal saved in the address book server; a second acquisition sub-component 116 configured to respond to a request for acquiring the shared information of the first terminal from the second address book client, and to acquire the current play progress of the multimedia application by interacting with the first address book client.

The sending component 120 includes: a content sub-component 122 configured to acquire the content of the multimedia application from the multimedia server according to the URL address of the multimedia application; a sending sub-component 124 configured to send the content of the multimedia application and the current play progress of the multimedia application to the second address book client.

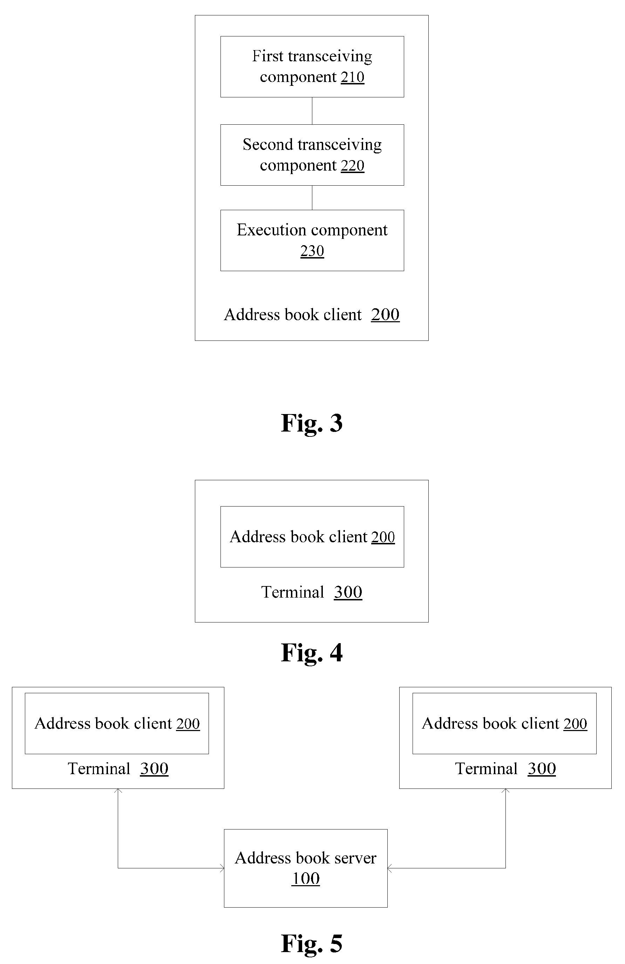

Fig. 3 is a structure diagram showing components of an address book client according to the embodiment of the disclosure. As shown in Fig. 3, the address book client 200 includes: a first transceiving component 210 configured to interact with an address book server so as to provide to the address book server information about the multimedia application that currently is in an active state in a first terminal in which the address book client 200 is located; a second transceiving component 220 configured to receive from the address book server information about the multimedia application that currently is in the active state in a second terminal, wherein the information about the multimedia application that currently is in the active state in the second terminal is provided to the address book server by the second address book client in the second terminal; an execution component 230 configured to synchronously play the content of the multimedia application in the first terminal according to the received information about the multimedia application that currently is in the active state in the second terminal.

The address book client further includes: an updating component 240 configured to update the shared information of the second terminal saved therein according to the received information about a multimedia application that currently is in the active state in the second terminal.

The address book client further includes: a download component 250 configured to acquire, from a multimedia server, the content of a multimedia application that currently is in the active state in the second terminal according to the URL address of the multimedia application carried in the received information about this multimedia application.

The address book client further includes: a validation component 260 configured to validate, before providing to the address book server the information about a multimedia application that currently is in an active state in the first terminal, the legality of providing the information about the multimedia application.

Fig. 4 is a structure diagram of a terminal according to the embodiment of the disclosure. As shown in Fig. 4, the terminal 300 includes an address book client 200 described above. The implementation of the function of the address book client 200 is the same as the above content, and no further description is needed here.

Fig. 5 is a structure diagram of an address book system according to the embodiment of the disclosure. As shown in Fig. 5, the address book system includes: an address book server 100 described above and at least one terminal 300 described above (Fig. 5 shows two terminals, each of which includes an address book client 200). The interaction function between the address book server 100 and the address book client 200 is the same as the above content, and no further description is needed here.

### Embodiment 1

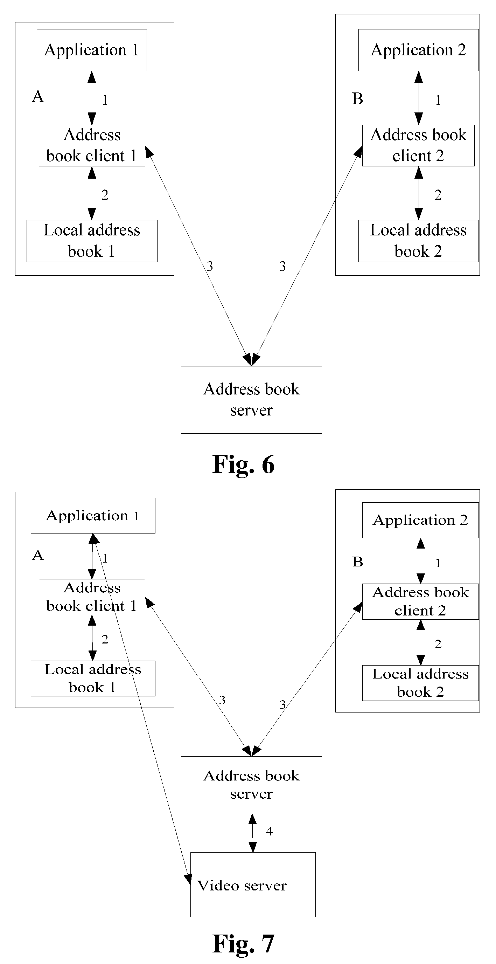

Fig. 6 is a diagram of an address book system according to Embodiment 1. As shown in Fig. 6, a device A includes an address book client 1 configured to interact with a local address book 1 and an address book server. Application 1, currently being used on the device A, may interact with the address book client 1. The local address book 1 is a local address book on the device A. The address book server is configured to manage the shared address book information and to interact with the address book client. In device B, entities have the same function as those in the device A, no further description is needed here.

Supposing the device A belongs to a user A and the device B belongs to a user B, and their respective address books have each other's information. The data interaction process of the address book system is as follows.

When the user A watches a video through an application 1 in the device A; the application 1 sends via an interface 1 the descriptive information of the video to the address book client 1, the descriptive information including the address, format, resolution, introduction and the like of the video.

The address book client 1 notifies, via an interface 3, the address book server to update the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server returns the time and the descriptive information to the address book client 2.

After receiving the information, the address book client 2 updates the relative information of the user A, and plays the video from the time position according to the acquired video time information and descriptive information, so as to achieve the purpose of dynamically presenting in real time the content currently being watched by the user A.

### Embodiment 2

The system structure in the embodiment is the same as that in Fig. 6. Supposing the device A belongs to a user A and the device B belongs to a user B, and their respective address books have each other's information. The data interaction process of the address book system is as follows.

The address book server periodically acquires from the address book client 1 the status information of the user A; after the address book server acquires the descriptive information of a video currently being watched by the user A through an application 1, the address book server updates the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server returns the time and the descriptive information to the address book client 2.

After receiving the information, the address book client 2 updates the relative information of the user A, and plays the video from the time position according to the acquired video time information and descriptive information, so as to achieve the purpose of dynamically presenting in real time the content currently being watched by the user A.

### Embodiment 3

The system structure in this embodiment is the same as that in Fig. 6. Supposing the device A belongs to a user A and the device B belongs to a user B, and their respective address books have each other's information. The data interaction process of the address book system is as follows.

The address book client 1 periodically requests the current status of the user A from an application (application 1 in Fig. 7) currently being used by the user A; when the address book client 1 acquires, via an interface 1, the descriptive information of a video currently being watched by the user A through the application 1, the address book client 1 notifies, via an interface 3, the address book server to update the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server returns the time and the descriptive information to the address book client 2.

After receiving the information, the address book client 2 updates the relative information of the user A, and plays the video from the time position according to the acquired video time information and descriptive information, so as to achieve the purpose of dynamically presenting in real time the content currently being watched by the user A.

### Embodiment 4

Fig. 7 is a diagram of an address book system according to Embodiment 4 of the disclosure. As shown in Fig. 7, a device A includes an address book client 1, which is configured to interact with a local address book 1 and an address book server. Application 1, currently being used on the device A, may interact with the address book client 1, and may acquire a video from a video server to play. The local address book 1 is a local address book on the device A. The address book server is configured to manage the shared address book information and to interact with the address book client. The address book server and the video server interact with each other through an interface 4. In device B, entities have the same function as those in the device A, no further description is needed here.

Supposing the device A belongs to a user A and the device B belongs to a user B, and their respective address books have each other's information. The data interaction process of the address book system is as follows.

When the user A watches a video through an application 1 in the device A; the application 1 sends via an interface 1 the descriptive information of the video to the address book client 1, the descriptive information including the address, format, resolution, introduction and the like of the video.

The address book client 1 notifies, via an interface 3, the address book server to update the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server acquires, via the interface 4, a video from the video server according to the received video time information and descriptive information, and returns the video and the descriptive information to the address book client 2.

After receiving the information, the address book client 2 updates the relative information of the user A, and starts playing the video, so as to achieve the purpose of dynamically presenting in real time the content currently being watched by the user A.

### Embodiment 5

The system structure in this embodiment is the same as that in Fig. 7. Supposing the device A belongs to a user A and the device B belongs to a user B, and their respective address books have each other's information. The data interaction process of the address book system is as follows.

The address book server periodically acquires from the address book client 1 the status information of the user A; after the address book server acquires the descriptive information of a video currently being watched by the user A through an application 1, the address book server updates the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server acquires, via the interface 4, a video from the video server according to the received video time information and descriptive information, and returns the video and the descriptive information to the address book client 2.

After receiving the information, the address book client 2 updates the relative information of the user A, and starts playing the video, so as to achieve the purpose of dynamically presenting in real time the content currently being watched by the user A.

### Embodiment 7

The system structure in this embodiment is the same as that in Fig. 7. Supposing the device A belongs to a user A and the device B belongs to a user B, and their respective address books have each other's information. The data interaction process of the address book system is as follows.

The address book client 1 periodically requests the current status of the user A from an application (application 1 in Fig. 7) currently being used by the user A; when the address book client 1 acquires, via an interface 1, the descriptive information of a video currently being watched by the user A through the application 1, the address book client 1 notifies, via an interface 3, the address book server to update the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the application 1 via the interface 1 to acquire the time that the video is played for currently.

The application 1, after receiving the request, returns to the address book client 1 the time that the video is played for currently.

The address book client 1 returns a response to the address book server after receiving the response, the response including the time that the user A watches the video for currently.

The address book server acquires, via the interface 4, a video from the video server according to the received video time information and descriptive information, and returns the video and the descriptive information to the address book client 2.

After receiving the information, the address book client 2 updates the relative information of the user A, and starts playing the video, so as to achieve the purpose of dynamically presenting in real time the content currently being watched by the user A.

### Embodiment 8

The system structure in this embodiment is the same as that in Fig. 6. Supposing the device A belongs to a user A and the device B belongs to a user B, and their respective address books have each other's information. The data interaction process of the address book system is as follows.

When the user A watches a video m through a media player (application 1) in the device A; the media player (application 1) sends via an interface 1 the descriptive information of the video m to the address book client 1, the descriptive information including the address=rtsp://example.com/f/bar/m.rm, format=rm, resolution=854X480, introduction and the like of the video.

The address book client 1 notifies, via an interface 3, the address book server to update the relative information of the user A.

The address book server updates the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the media player (application 1) via the interface 1 to acquire the time that the video is played for currently.

The media player (application 1), after receiving the request, returns to the address book client 1 the time information npt=30 that the video is played for currently.

The address book client 1 returns a response to the address book server after receiving the response, the response including the time that the user A watches the video for currently.

The address book server returns the time and the descriptive information to the address book client 2.

After receiving the information, the address book client 2 updates the relative information of the user A, and plays the video from the time position according to the acquired video time information and descriptive information, so as to achieve the purpose of dynamically presenting in real time the content currently being watched by the user A. Here, the Real Time Streaming Protocol (RTSP) protocol is employed to acquire the video, specifically:
the user B sends an RTSP message containing a SETUP command to a video server, to establish a session of transferring a video;
C->S: SETUP rtsp://example.com/f/bar/n.rm RTSP/1.0
CSeq: 502
Transport: RTP/AVP; unicast;client_prt=3588-3589

After the server receives the message, the server returns a response to the user B, specifically as follows:
S->C: RTSP/1.0 200 OK
CSeq: 502
Date: 18 NOV 2012 17:35:04 GMT
Session: 12345670
Transport: RTP/AVP; unicast;
client_prt=3588-3589;server_prt=6156-6157

After the user B receives the response, the user B sends an RTSP message containing a PLAY command to play the video m, specifically as follows,
C->S: PLAY rtsp://example.com/f/bar/m.rm RTSP/1.0
CSeq: 503
Session: 12345678
Range: npt=30

After the server receives the PLAY request from the user B, the server returns a response to the user B, specifically as follows:
S->C: RTSP/1.0 200 OK
CSeq: 503
Date: 18 NOV 2012 17:35:08 GMT
Session: 12345670

The video m is transferred from the position specified by npt.

### Embodiment 9

The system structure in this embodiment is the same as that in Fig. 7. Supposing the device A belongs to a user A and the device B belongs to a user B, and their respective address books have each other's information. The data interaction process of the address book system is as follows.

When the user A watches a video m through a media player (application 1) in the device A; the media player (application 1) sends via an interface 1 the descriptive information of the video m to the address book client 1, the descriptive information including the address=rtsp://example.com/f/bar/m.rm, format=rm, resolution=854X480, introduction and the like of the video.

The address book client 1 notifies, via an interface 3, the address book server to update the relative information of the user A.

The address book server updates the relative information of the user A.

When the user B views the information of the user A through the address book client 2, the address book client 2 sends a request to the address book server via an interface 3, requesting to acquire the latest information of the user A.

After receiving the request, the address book server queries the relative information of the user A; if the information contains the information about the video being watched by the user A, the address book server sends a request to the address book client 1 via the interface 3, requesting to acquire the time that the user A watches for currently.

The address book client 1, after receiving the request, sends a request to the media player (application 1) via the interface 1 to acquire the time that the video is played for currently.

The media player (application 1), after receiving the request, returns to the address book client 1 the time information npt=30 that the video is played for currently.

The address book client 1 returns a response to the address book server after receiving the response, the response including the time that the user A watches the video for currently.

The address book server acquires, via an FTP (interface 4), a video from a video server according to the received video time information and descriptive information, and returns the video and the descriptive information to the address book client 2.

After receiving the information, the address book client 2 updates the relative information of the user A, and starts playing the video, so as to achieve the purpose of dynamically presenting in real time the content currently being watched by the user A.

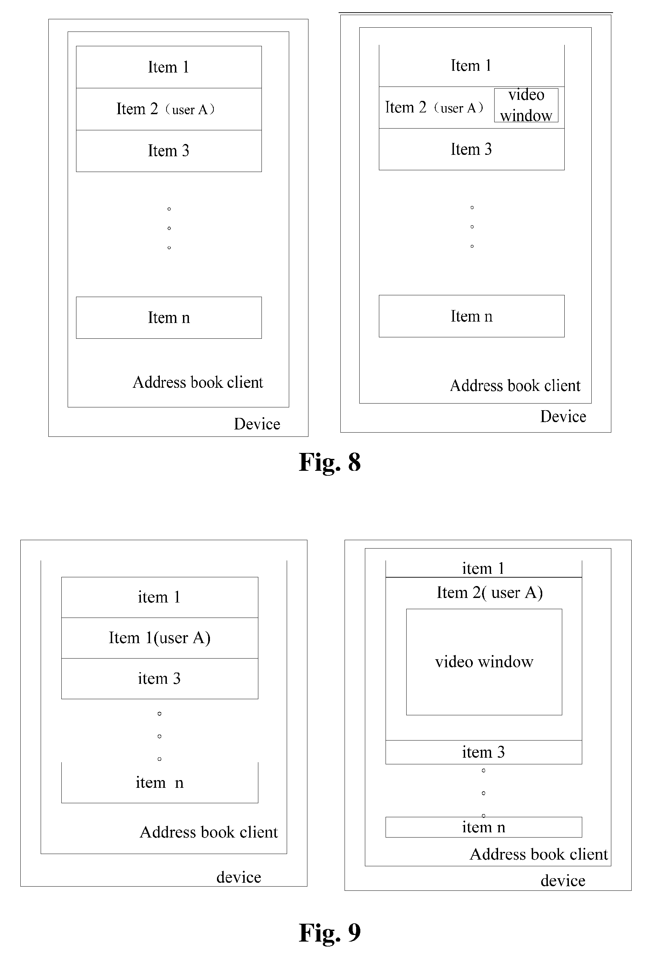

In the embodiment of the disclosure, there are multiple ways for the address book client 2 to play the video, and one preferable way is as shown in Fig. 8. The information of the contacts in the address book client in the device is as shown in the left side of Fig. 8; when the address book client updates the information of the user A (item 2), if the user A is watching a video, then the address book client plays the acquired video content by a manner of embedding a video play window into the item 2 (as shown in the right side of Fig. 8).

In another embodiment of the disclosure, the video play way as shown in Fig. 9 is employed to play the video. The information of the contacts in the address book client in the device is as shown in the left side of Fig. 9; when the address book client updates the information of the user A (item 2), if the user A is watching a video, then the address book client plays the acquired video content by a manner of expanding the item 2 and embedding a video play window into the item 2 (as shown in the right side of Fig. 9).

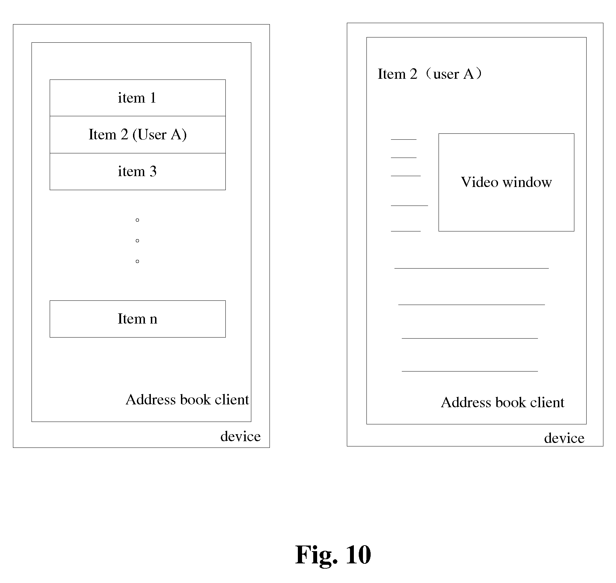

In a third embodiment of the disclosure, the video play way as shown in Fig. 10 is employed to play the video. The information of the contacts in the address book client in the device is as shown in the left side of Fig. 10; when the address book client updates the information of the user A (item 2), if the user A is watching a video, then the address book client plays the acquired video content by a manner of expanding the item 2 to exclusively occupy the entire window of the address book client and embedding a video play window into the item 2 (as shown in the right side of Fig. 10). Other places outside the video window may be used to display other information of the user A (the information may be acquired from the local address book and/or the address book server), as shown by horizontal lines in the right side of Fig. 10.

In another embodiment, software is provided to synchronously play the multimedia content mentioned above, and the software is configured to execute the technical solution described in the above embodiments.

In another embodiment, a storage medium is provided, which stores the above software and includes but not limited to an optical disc, a floppy disk, a hard disk, an erasable memory and the like.

From the above description, it may be seen that the disclosure achieves the following technical effects:
an address book client is employed to provide, to an address book server, information about a multimedia application that currently is in an active state in a terminal in which the address book client is located, so that other terminals installed with the address book client may acquire the information about the multimedia application from the address book server and dynamically present the multimedia application, thus, the problem of how to dynamically present through an address book multimedia content being watched by other users is solved, and user experience is improved.

Obviously, those skilled in the art should understand that the components or steps described above may be implemented by a common computer device; the components or steps may be integrated on a single computing device or distributed on a network composed of a plurality of computing devices; optionally, the components or steps may be implemented by a programming code executable by a computing device, thus they may be stored in a storage device to be executed by a computing device and executed in a different order in some cases, or manufactured into individual integrated circuit component respectively, or several of them may be manufactured into a single integrated circuit component to implement; in this way, the disclosure is not limited to any combination of specific hardware and software.

The above are only the preferred embodiments of the disclosure and not intended to limit the disclosure. For those skilled in the art, various modifications and changes may be made to the disclosure. Any modification, equivalent substitute and improvement made within the spirit and principle of the disclosure are deemed to be included within the scope of protection of the disclosure.

### Industrial Applicability

The technical solution provided in the above embodiments of the disclosure might be applied to an address book server, an address book client, a terminal including an address book client and an address book system. By employing an address book client to provide, to an address book server, information about a multimedia application that currently is in an active state in a terminal in which the address book client is located, so that other terminals installed with the address book client may acquire the information about the multimedia application from the address book server and dynamically present the multimedia application, the problem of how to dynamically present through an address book multimedia content being watched by other users is solved, and user experience is improved.

## Claims

1. A method for synchronously playing multimedia content, comprising:
interacting with a first address book client in a first terminal, by an address book server, to acquire information about a multimedia application that currently is in an active state in the first terminal; and
sending, by the address book server, the information about the multimedia application to a second address book client in a second terminal, wherein the information about the multimedia application is used for the second address book client to synchronously play the content of the multimedia application in the second terminal.

2. The method for synchronously playing the multimedia content according to claim 1, wherein interacting with the first address book client in the first terminal, by the address book server, to acquire the information about the multimedia application that currently is in the active state in the first terminal comprises:
periodically interacting with the first address book client, by the address book server, to acquire descriptive information of the multimedia application that currently is in the active state in the first terminal, wherein the descriptive information comprises a Uniform Resource Locator (URL) address of the multimedia application;
updating, by the address book server, the descriptive information to the shared information of the first terminal saved in the address book server;
the address book server responding to a request for acquiring the shared information of the first terminal from the second address book client and acquiring current play progress of the multimedia application by interacting with the first address book client.

3. The method for synchronously playing the multimedia content according to claim 2, wherein sending, by the address book server, the information about the multimedia application to the second address book client in the second terminal comprises:
acquiring, by the address book server, the content of the multimedia application from a multimedia server according to the URL address of the multimedia application;
sending, by the address book server, the content of the multimedia application and the current play progress of the multimedia application to the second address book client.

4. The method for synchronously playing the multimedia content according to claim 3, wherein after sending, by the address book server, the content of the multimedia application and the current play progress of the multimedia application to the second address book client, the method further comprises:
synchronously playing, by the second address book client, the content of the multimedia application in the second terminal according to the content of the multimedia application and the current play progress of the multimedia application.

5. The method for synchronously playing the multimedia content according to claim 2, wherein sending, by the address book server, the information about the multimedia application to the second address book client in the second terminal comprises:
sending, by the address book server, the descriptive information of the multimedia application and the current play progress of the multimedia application to the second address book client.

6. The method for synchronously playing the multimedia content according to claim 5, wherein after sending, by the address book server, the descriptive information of the multimedia application and the current play progress of the multimedia application to the second address book client, the method further comprises:
acquiring, by the second terminal, the content of the multimedia application from a multimedia server according to the URL address of the multimedia application included in the descriptive information;
synchronously playing, by the second address book client, the content of the multimedia application in the second terminal according to the content of the multimedia application and the current play progress of the multimedia application.

7. The method for synchronously playing the multimedia content according to claim 2, wherein the descriptive information of the multimedia application further comprises at least one of the following:
play format of the multimedia application, play resolution of the multimedia application and introduction of the multimedia application.

8. The method for synchronously playing the multimedia content according to claim 1, wherein before synchronously playing, by the second address book client, the content of the multimedia application in the second terminal according to the information about the multimedia application, the method further comprises:
updating, by the second address book client, the shared information of the first terminal saved in the second terminal according to the information about the multimedia application.

9. The method for synchronously playing the multimedia content according to claim 1, wherein before acquiring, by the address book server, information about the multimedia application that currently is in the active state in the first terminal, the method further comprises:
validating, by the first terminal, legality of a request for acquiring the information about the multimedia application.

10. The method for synchronously playing the multimedia content according to claim 4 or 6, wherein the second address book client synchronously plays the content of the multimedia application by a manner of embedding a video play window into items, which are saved in the second address book client, of the first terminal shared information.

11. The method for synchronously playing the multimedia content according to any one of claims 1 to 9, wherein the address book server is a fusion address book server and the address book client is a fusion address book client.

12. An address book server, comprising:
an acquisition component configured to interact with a first address book client in a first terminal to acquire information about a multimedia application that currently is in an active state in the first terminal;
a sending component configured to send the information about the multimedia application to a second address book client in a second terminal, wherein the information about the multimedia application is used for the second address book client to synchronously play the content of the multimedia application in the second terminal.

13. The address book server according to claim 12, wherein the acquisition component comprises:
a first acquisition sub-component configured to periodically interact with the first address book client to acquire the descriptive information of a multimedia application that currently is in an active state in the first terminal, wherein the descriptive information comprises a Uniform Resource Locator (URL) address of the multimedia application;
an update sub-component configured to update the descriptive information to the shared information of the first terminal saved in the address book server;
a second acquisition sub-component configured to respond to a request for acquiring the shared information of the first terminal from the second address book client, and to acquire current play progress of the multimedia application by interacting with the first address book client.

14. The address book server according to claim 12, wherein the sending component comprises:
a content sub-component configured to acquire the content of the multimedia application from a multimedia server according to the URL address of the multimedia application;
a sending sub-component configured to send the content of the multimedia application and the current play progress of the multimedia application to the second address book client.

15. An address book client, comprising:
a first transceiving component configured to interact with an address book server to provide to the address book server information about a multimedia application that currently is in an active state in a first terminal in which the address book client is located;
a second transceiving component configured to receive from the address book server information about a multimedia application that currently is in an active state in a second terminal, wherein the information about the multimedia application that currently is in the active state in the second terminal is provided to the address book server by the second address book client in the second terminal;
an execution component configured to synchronously play the content of the multimedia application in the first terminal according to the received information about the multimedia application that currently is in the active state in the second terminal.

16. The address book client according to claim 15, further comprising:
an updating component configured to update the shared information of the second terminal saved in the address book client according to the received information about the multimedia application that currently is in the active state in the second terminal.

17. The address book client according to claim 15, further comprising:
a download component configured to acquire, from a multimedia server, the content of the multimedia application that currently is in the active state in the second terminal according to the URL address of the multimedia application carried in the received information about this multimedia application.

18. The address book client according to claim 15, further comprising:
a validation component configured to validate, before providing to the address book server the information about the multimedia application that currently is in the active state in the first terminal, legality of providing the information about the multimedia application.

19. A terminal, comprising an address book client according to any one of claims 15 to 18.

20. An address book system, comprising an address book server according to any one of claims 12 to 14 and at least one terminal according to claim 19.
